# EUROPÄISCHE PATENTSCHRIFT

(11) **EP 2 023 050 B1**
(45) Veröffentlichungstag und Bekanntmachung des Hinweises auf die Patenterteilung: **02.06.2010**
(21) Anmeldenummer: 08013093.3
(22) Anmeldetag: 21.07.2008
(51) Int. Cl.: F24F 5/00, E04F 13/08, F24D 3/16

(54) **Wand- oder Deckenverkleidung mit Heiz- bzw. Kühleinrichtung**
Wall or ceiling cladding with heating or cooling device
Habillage mural ou plafonnier doté d'un dispositif de chauffage ou de refroidissement

(30) Priorität: 23.07.2007 DE 202007010215 U
(43) Veröffentlichungstag der Anmeldung: 11.02.2009
(73) Patentinhaber: LINDNER AG, D-94424 Arnstorf (DE)
(72) Erfinder: Böhm, Robert, 84163 Marklkofen (DE); Hörner, Michael, 94060 Pocking (DE); Lettl, Gerhard, 94424 Arnstorf (DE); Gerwallner, Johannes, 94424 Arnstorf (DE)
(74) Vertreter: Klingseisen, Franz

(56) Entgegenhaltungen:
- EP-A- 0 662 547
- EP-A- 0 772 006
- EP-A- 1 457 614
- WO-A-82/01058
- GB-A- 2 349 453

## Beschreibung

Die Erfindung betrifft eine Wand- oder Deckenverkleidung mit einem Heiz- oder Kühlregister in Form von Rohrleitungen, die auf der Rückseite der Verkleidungsfläche an einem Wärmeleitprofil anliegen (siehe z.B. Patentdokument WO-8201058-A).

Aufgabe der Erfindung ist es, einen guten Wärmeleitkontakt mit der Verkleidungsfläche herzustellen.

Dies wird erfindungsgemäß durch Niederhalterelemente erreicht, die zumindest an den Enden federnd eingespannt sind und eine Gruppe von Heiz- bzw. Kühlleitungen bzw. deren Wärmeleitprofile an der Verkleidungsfläche anliegend halten.

Die Erfindung wird beispielsweise anhand der Zeichnung näher erläutert. Es zeigen:
- Fig. 1: einen Querschnitt durch eine Unterkonstruktion ohne Verkleidungsfläche,
- Fig. 2: den gleichen Aufbau in Verbindung mit einer Verkleidungsfläche,
- Fig. 3: Ansichten eines Federelementes,
- Fig. 4: Ansichten eines Niederhalters,
- Fig. 5: eine weitere Ausführungsform eines Niederhalters,
- Fig. 6-8: verschiedene Ausführungsformen von Niederhaltern,
- Fig. 9: eine andere Ausführungsform der federnden Abstützung,
- Fig. 10: eine schematische Draufsicht auf ein Heiz- bzw. Kühlelement,
- Fig. 11: eine schematische Draufsicht auf eine andere Anordnung der Wärmeleitprofile relativ zu den Tragschienen, und
- Fig. 12: eine perspektivische Ansicht von Federelementen zur Verbindung der Wärmeleit-profile mit der Tragschiene bei der Anordnung nach Fig. 11.

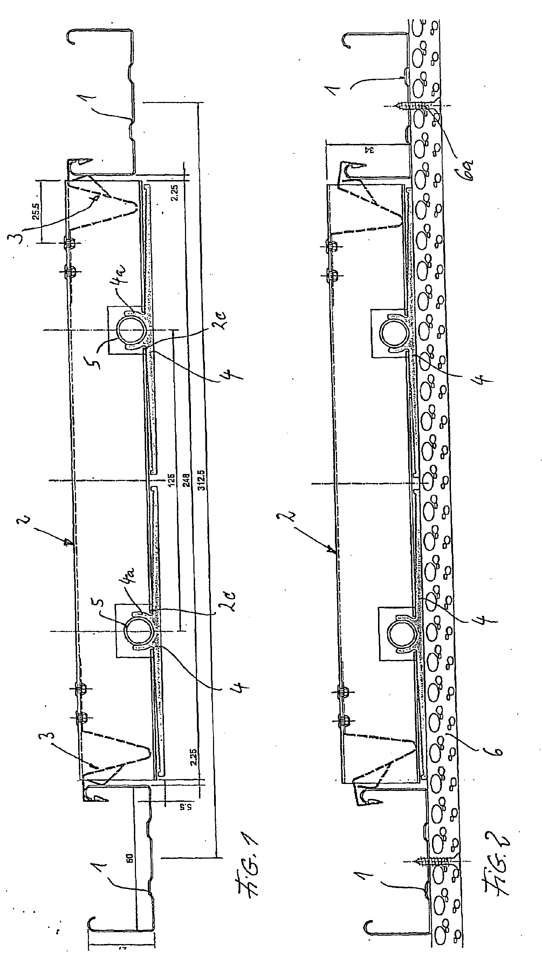

In Fig. 1 sind mit 1 senkrecht zur Zeichenebene verlaufende Tragschienen mit U-Querschnitt bezeichnet, an denen ein quer dazu angeordneter, im Wesentlichen starrer Niederhalter 2 über abgewinkelte Federelemente 3 eingehängt ist. Mit 4 sind plattenförmige Wärmeleitprofile bezeichnet, die senkrecht zur Zeichenebene streifenförmig verlaufen und auf der Rückseite einen etwa halbkreisförmigen Ansatz 4a aufweisen, in dem eine Heiz- oder Kühlleitung 5 angeordnet ist, die von einem Heiz- oder Kühlmedium durchströmt wird.

In der entspannten Stellung dieser Unterkonstruktion in Fig. 1 haben die nach unten gerichteten Wärmeleitflächen der Wärmeleitprofile 4 einen Abstand von der Unterseite der Tragschienen 1. Wenn an den Tragschienen 1 eine Verkleidungsfläche, wie beispielsweise die in Fig. 2 wiedergegebene Gipskartonplatte 6 beispielsweise mittels Schrauben 6a befestigt wird, werden die Wärmeleitprofile 4 nach oben gedrückt, sodass die Unterseiten der Wärmeleitprofile 4 mit der Unterseite der Tragschienen 1 in etwa fluchten. Hierbei werden die abgewinkelten Federelemente 3 derart verformt. dass sie den Niederhalter 2 an den Wärmeleitprofilen 4 unter Spannung anliegend halten.

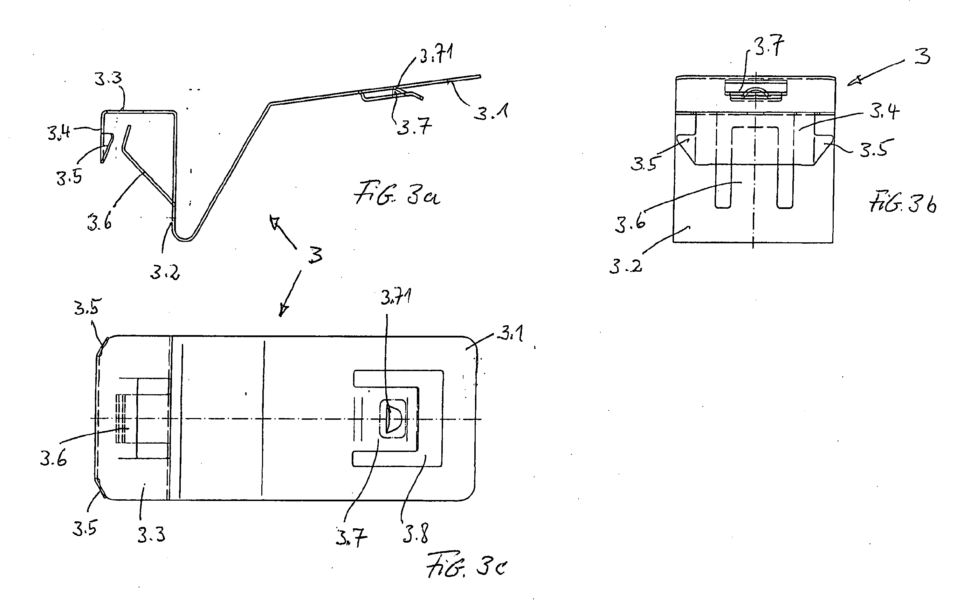

Die Fig. 3 zeigen im Einzelnen eine Ausführungsform eines Federelementes 3. Fig. 3a ist eine Seitenansicht, Fig. 3b eine Stirnansicht von links in Fig. 3a und Fig. 3c eine Draufsicht von oben in Fig. 3a. Bei der Ausführungsform nach den Fig. 1 und 2 ist ein Halteabschnitt 3.1 der Federelemente 3 durch Nieten mit der Stegfläche des im Querschnitt U-förmigen Niederhalters 2 verbunden. Bei der Ausführungsform nach den Fig. 3 ist auf dem Halteabschnitt 3.1 der Federelemente ein Ausschnitt 3.8 mit einer Federzunge 3.7 ausgebildet, die anstelle der Nieten in Fig. 1 und 2 zur Verbindung mit dem Niederhalter 2 dient.

Von diesem etwas schräg zur Horizontalen liegenden Halteabschnitt 3.1 erstreckt sich ein V-förmiger Abschnitt 3.2 nach unten, wobei an dem dem Abschnitt 3.1 gegenüberliegenden Schenkelende ein etwa horizontal verlaufender Abschnitt 3.3 ausgebildet ist, dessen freier Rand bei 3.4 nach unten abgewinkelt ist. An den Ecken dieses abgewinkelten Abschnitt 3.4 ist jeweils eine Nase 3.5 abgebogen, die nach innen gerichtet ist. Auf dem in Fig. 3a linken Schenkel des V-förmigen Abschnitts 3.2 ist durch Ausstanzen eine federnde Lasche 3.6 ausgebildet, die in der Ansicht der Fig. 3a nach außen ragt und einen abgewinkelten Endabschnitt aufweist.

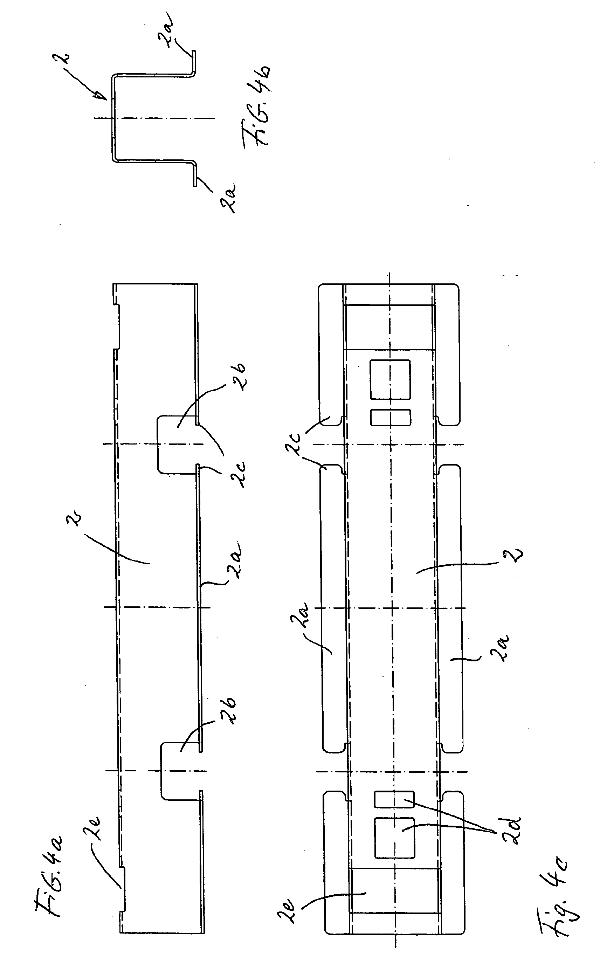

Der Niederhalter 2 ist im Einzelnen in Fig. 4a in der Ansicht der Fig. 1 und 2 wiedergegeben, wobei Fig. 4b eine Stirnansicht und Fig. 4c eine Draufsicht von oben in Fig. 4a zeigt. Der Niederhalter 2 ist im Wesentlichen ein im Querschnitt U-förmiges Profil, wobei die nach unten gerichteten Schenkel an den freien Enden nach außen abgewinkelte Randbereiche 2a aufweisen, mittels denen der Niederhalter an den Wärmeleitprofilen 4 anliegt. Diese nach außen abgewinkelten Randabschnitte 2a sind im Bereich von Ausstanzungen 2b unterbrochen, die zur Aufnahme der halbkreisförmigen Aufnahmeabschnitte 4a für die Heiz- bzw. Kühlleitungen 5 dienen, wie dies in den Fig. 1 und 2 wiedergegeben ist.

Im Bereich dieser Ausstanzungen 2b sind Laschen 2c an den Randabschnitten 2a ausgebildet, die in der Montagestellung in Fig. 1 und 2 bzw. 5a und 5b die halbkreisförmigen Ansätze 4a an den Wärmeleitprofilen hintergreifen, sodass die Wärmeleitprofile 4 an den Niederhaltern 2 gehalten werden.

Die abgewinkelten Ecken 3.5 des außen liegenden Randabschnitts des Federelementes 3 dienen zum Einhängen an den nach innen abgerundeten Rändern der Tragschienen 1, wie Fig. 1 und 2 zeigen. Die federnde Lasche 3.6 dient zum Abstützen des Federelementes 3 an der Außenseite der Tragschiene 1 in der gespannten Stellung in Fig. 2, in der das Wärmeleitprofil 4 nach oben gedrückt wird, sodass die Federelemente 3 gespannt werden.

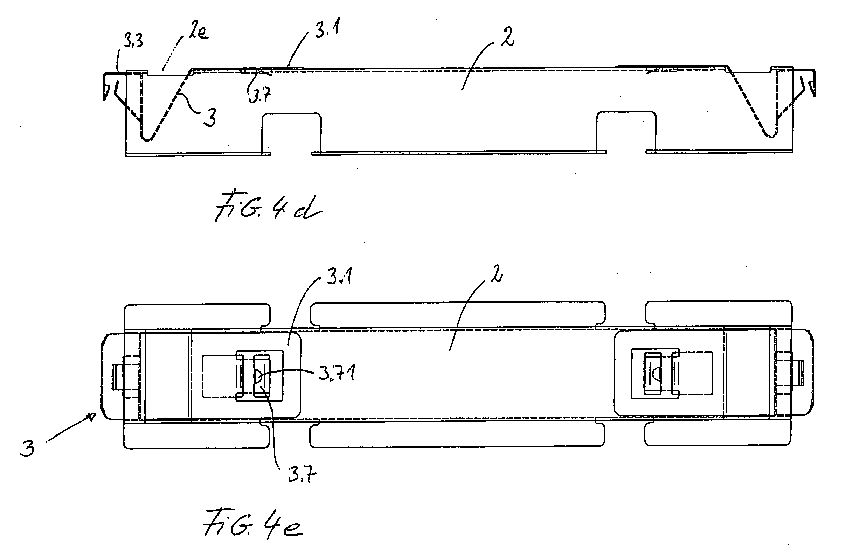

Das in der Draufsicht etwa rechteckige Federelement 3 ist in den im Querschnitt U-förmigen Niederhalter 2 eingesetzt, wie Fig. 4e zeigt, und mit dem Abschnitt 3.1 an dem Steg des Niederhalters 2 befestigt. Bei der Ausführungsform nach den Fig. 1 und 2 erfolgt die Befestigung durch Nieten und bei der Ausführungsform nach Fig.3 und 4 durch Einstecken der Federzunge 3.7 des Federelementes 3 in einen Ausschnitt 2d am Steg des Niederhalters 2, wobei dieser Ausschnitt durch einen Quersteg unterbrochen ist, an dem sich eine Sicke 3.71 an der Federzunge 3.7 des Federelementes 3 einhängt. Fig. 4d zeigt den Niederhalter 2 mit eingesetzten Federelementen 3 an den gegenüberliegenden Enden und Fig. 4e zeigt eine Draufsicht auf den Niederhalter 2 in Fig. 4d.

Wie die Ansichten in Fig. 4a und 4c zeigen, ist der Steg des Niederhalters 2 nahe den Enden mit einem Ausschnitt 2e versehen, durch den bei der Montage der Halteabschnitt 3.1 des Federelementes 3 von unten so eingeschoben wird, dass der Halteabschnitt 3.1 auf der Oberseite des Niederhalters 2 liegt und die Federzunge 3.7 nach unten in den Ausschnitt 2d eingreift. Der Abschnitt 3.3 der Federelemente 3 stützt sich dabei an der Innenseite des Stegendes des Niederhalters 2 ab, wie dies Fig. 4d zeigt. Fig. 3a zeigt das Federelement 3 in entspannter Stellung, wobei der Halteabschnitt 3.1 etwas schräg zur Horizontalen verläuft. Im eingesetzten Zustand nach Fig. 4d ist damit das Federelement 3 unter einer gewissen Vorspannung, weil der Abschnitt 3.1 in die Ebene des Steges des Niederhalters 2 gedrückt ist.

Durch die Federspannung der Federelemente 3 werden die abgewinkelten Randabschnitte 2a des Niederhalters 2 an den Wärmeleitprofilen 4 angedrückt, sodass diese in gutem Wärmeleitkontakt mit der Verkleidungsplatte 6 gehalten werden.

In Fig. 1 und 2 sind der Einfachheit halber nur zwei Rohrleitungen 5 bzw. zwei Wärmeleitprofile 4 pro Niederhalter 2 wiedergegeben. Es ist aber auch möglich, durch einen Niederhalter 2 mehrere nebeneinander liegende Wärmeleitprofile 4 zu beaufschlagen.

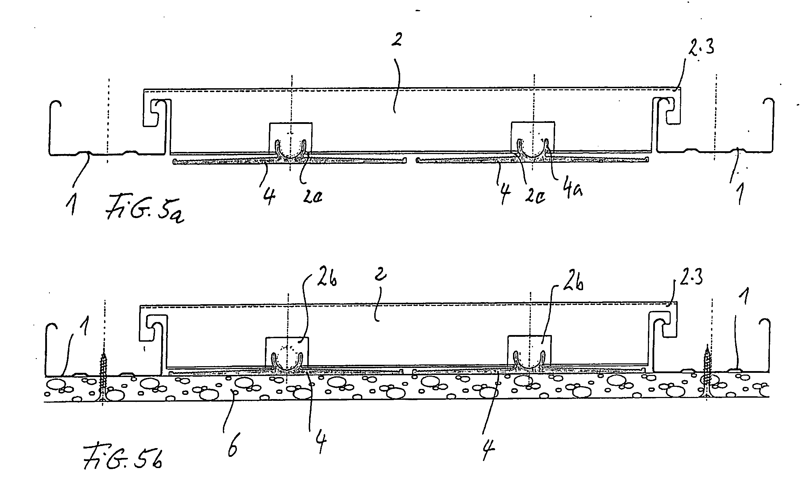

Bei der Ausführungsform nach Fig. 5 sind an den gegenüberliegenden Enden des Niederhalters 2 hakenförmig abgewinkelte Randbereiche 2.3 beispielsweise durch Ausstanzen ausgebildet, die den nach innen abgewinkelten bzw. abgerundeten Rand der Tragschienen 1 übergreifen. In der entspannten Stellung in Fig. 5a, in der keine Verkleidungsplatte 6 an dieser Unterkonstruktion anliegt, sind die Niederhalter 2 über diese hakenförmigen Endabschnitte 2.3 an den Tragschienen 1 eingehängt. Wird eine Verkleidungsplatte 6 an den Tragschienen 1 befestigt, so werden die Wärmeleitprofile 4 durch Anlage an der Verkleidungsplatte 6 nach oben gedrückt und damit auch der Niederhalter 2, der mit den abgewinkelten Randbereichen 2a auf den Wärmeleitprofilen aufliegt, wobei die hakenförmigen Endabschnitte 2.3 an der Unterkante der nach innen abgerundeten Ränder der Tragschienen 1 zum Anliegen kommen, wie Fig. 5b zeigt. Diese hakenförmigen Bereiche 2.3 sind vorzugsweise elastisch bzw. federnd ausgebildet, sodass in der Anlagestellung nach Fig. 5b der Niederhalter 2 unter der Federvorspannung dieser hakenförmigen Endabschnitte 2.3 mit seinen Anlageflächen 2a gegen die Wärmeleitprofile 4 drückt.

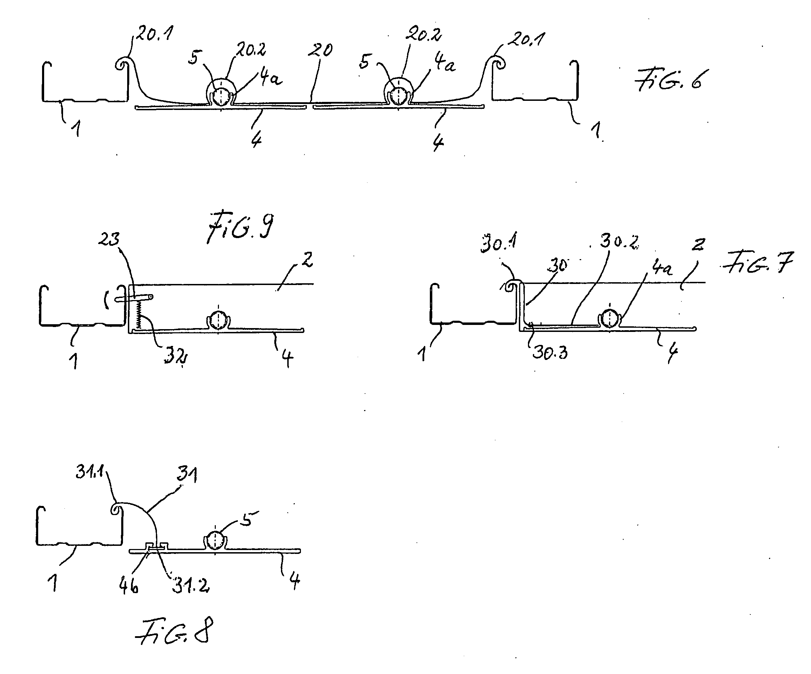

Fig. 6 zeigt in einer Querschnittsansicht zwei plattenförmige Wärmeleitprofile 4 mit jeweils einem etwa nutförmigen Ansatz 4a zur Aufnahme einer Heiz- oder Kühlleitung 5 zwischen zwei Tragschienen 1 und einem Niederhalter 20 in Form eines bandförmigen Federelements, das an den gegenüberliegenden Enden bei 20.1 abgewinkelt oder abgebogen ist, damit es an den Tragschienen 1 eingehängt werden kann, während auf dem Mittelabschnitt des Niederhalters 20 zwei Ausbuchtungen 20.2 ausgebildet sind, welche federnd die nutenförmigen Ansätze 4a übergreifen und damit die Wärmeleitprofile 4 halten. Bei dieser Ausführungsform eines federnden Niederhalters 20 ergibt sich insgesamt eine federnde Abstützung der Wärmeleitprofile 4 an den Tragschienen 1, wobei die Montage relativ einfach ist, weil die Wärmeleitprofile 4 mit den halbkreisförmigen Aufnahmeabschnitten bzw. Ansätzen 4a in den Niederhalter mit Rastwirkung eingedrückt werden können.

Fig. 7 zeigt eine Ausführungsform mit einem Federelement 30, das in der Ansicht in Fig. 7 etwa L-förmig gestaltet ist, wobei an dem einen Schenkel das freie Ende 30.1 abgebogen oder abgewinkelt ist zum Einhängen an der Tragschiene 1 und der andere Schenkel 30.2 den halbkreisförmigen Aufnahmeabschnitt bzw. Ansatz 4a des Wärmeleitprofils 4 hintergreift.

Der Niederhalter 2 in Fig. 7 entspricht dem der Fig. 1 und 2, wobei das Federelement 30 mit dem Niederhalter 2 verbunden ist, beispielsweise im Übergangsbereich der beiden Schenkel 30.1 und 30.2 durch einen quer verlaufenden Stift 30.3, der am Niederhalter 2 befestigt bzw. gelagert und mit dem Federelement 30 verbunden ist.

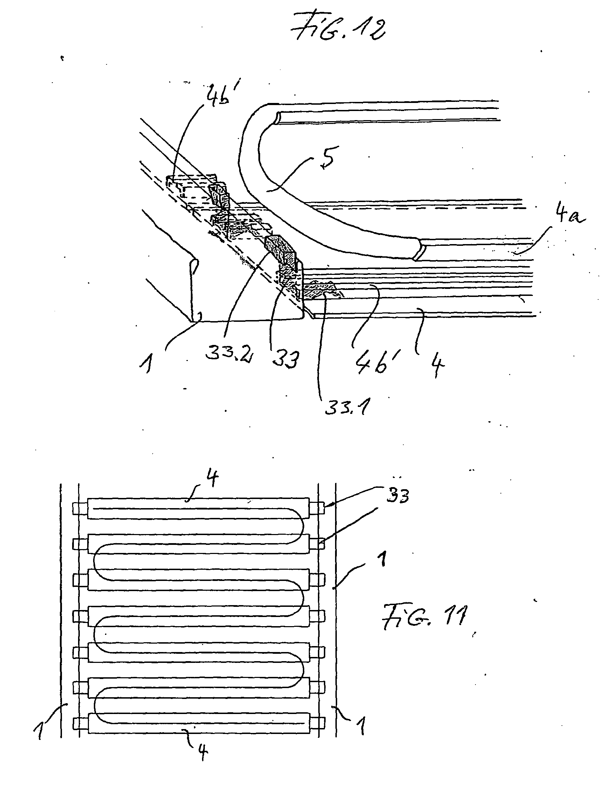

Fig. 8 zeigt eine Ausführungsform eines bogenförmigen Federelementes 31, das an einem Ende bei 31.1 abgebogen oder abgewinkelt ist zum Einhängen an der Tragschiene 1 und am anderen Ende einen T-förmigen Quersteg 31.2 aufweist, der in einen entsprechenden, im Querschnitt etwa C-förmigen Aufnahmeabschnitt 4b des Wärmeleitprofils 4 eingreift, wobei das Federelement 31 seitlich in den Aufnahmeabschnitt 4b des Wärmeleitprofils 4 eingeschoben wird. Bei dieser Ausführungsform nach Fig. 8 kann ein platten- oder schienenförmiger Niederhalter 2 entfallen, wie dies auch bei der nachfolgend beschriebenen Anordnung nach Fig. 11 und 12 der Fall ist.

Fig. 9 zeigt eine Ausführungsform, bei der an dem Niederhalter 2 ein Hebel 23 angelenkt ist, der in eine entsprechende Ausnehmung der Tragschiene 1 mit seinem freien Ende eingreift, wobei zwischen Hebel 23 und Wärmeleitprofil 4 eine Druckfeder 32 angeordnet ist, die in der dargestellten Haltestellung das Wärmeleitprofil 4 nach unten drückt, wobei sich die Druckfeder 32 am Hebel 23 abstützt. Wie durch einen Pfeil am Hebelende angedeutet, kann der Hebel 23 in der Ausnehmung der Tragschiene 1 angehoben und versetzt werden, sodass der Niederhalter 2 von der Tragschiene 1 abgenommen werden kann.

Bei den Ausführungsformen nach den Fig. 7 und 9 ist am Niederhalterelement 2 jeweils ein Ausschnitt 2b vorgesehen, wie er in Fig. 5b wiedergegeben ist, wobei dieser Ausschnitt 2b zur Aufnahme der halbkreisförmigen Aufnahmeabschnitte 4a mit der Heiz- bzw. Kühlleitung 5 dient.

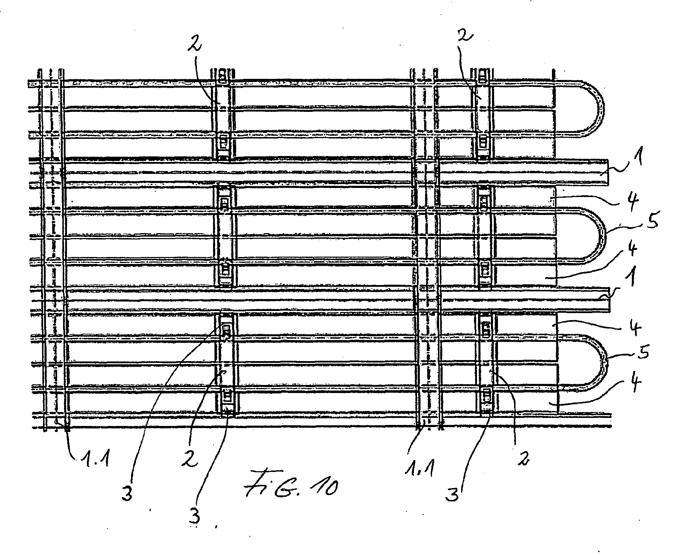

Fig. 10 zeigt schematisch eine Draufsicht von oben auf ein Heiz- oder Kühlregister z. B. auf einem Deckenelement, das eine in Schlangenlinien verlegte Rohrleitung 5 aufweist. Zwei Wärmeleitprofile 4 erstrecken sich jeweils etwa parallel zwischen zwei Tragschienen 1. Bei 1.1 sind quer verlaufende Tragschienen wiedergegeben, die bei diesem Ausführungsbeispiel über den Tragschienen 1 angeordnet sind und diese tragen.

Jeweils zwei Wärmeleitprofile 4 sind in Abständen durch Niederhalter 2 beaufschlagt, die an den Enden jeweils ein Federelement aufweisen, das der Ausführungsform nach Fig. 3 oder Fig. 7 entsprechen kann, mittels denen der Niederhalter 2 an den Tragschienen 1 federnd so eingehängt ist, dass die Wärmeleitprofile 4 durch die Niederhalter 2 nach unten gedrückt werden, wie dies in Fig. 2 wiedergegeben ist.

Fig. 11 zeigt eine andere Anordnung eines Heizregisters in der Draufsicht, wobei zwischen Tragschienen 1 Wärmeleitprofile 4 quer verlaufen, während sie bei der Anordnung nach Fig. 10 parallel zu den Tragschienen 1 verlaufen. Bei dieser Ausführungsform sind an den gegenüberliegenden Ende der Wärmeleitprofile 4 Federelemente 33 angeordnet, mittels denen die Wärmeleitprofile 4 an den Tragschienen 1 eingehängt sind und zugleich nach unten gedrückt werden.

Fig. 12 zeigt eine perspektivische Ansicht einer Anordnung nach Fig. 11, wobei die Federelemente 33 mit einem Ende an der Tragschiene 1 eingehängt sind und sich mit dem gegenüberliegenden Ende in einer Aussparung des Wärmeleitprofils 4 abstützen. Diese Federelemente 33 sind so ausgebildet, dass sie in der Darstellung der Fig. 12 eine Federvorspannung auf die Wärmeleitprofile 4 nach unten relativ zur Tragschiene 1 ausüben.

Bei der Ausführungsform nach Fig. 12 sind auf der Oberseite der Wärmeleitprofile 4 Aufnahmeabschnitte 4b' entsprechend dem Aufnahmeabschnitt 4b in Fig. 8 ausgebildet, in die ein Schenkel 33.1 des Federelementes 33 eingeschoben werden kann, während das gegenüberliegende Ende 33.2 des Federelementes abgewinkelt und an der Tragschiene 1 so eingehängt ist, dass sich das Federelement 33 nicht von der Tragschiene 1 lösen kann, wenn von unten eine Verkleidungsplatte 6 gegen das Wärmeleitprofil 4 gedrückt wird.

Bei der Anordnung nach Fig. 11, bei der die Wärmeleitprofile 4 quer zu den Tragschienen 1 verlaufen, können allein Federelemente verwendet werden, ohne dass ein Niederhalter 2 mit daran befestigten Federelemente 3 benötigt wird.

## Patentansprüche

1. Wand- oder Deckenverkleidung mit Wärmeleitprofilen (4), die an einer Verkleidungsplatte (6) anliegen und nebeneinander liegend zur Aufnahme von Heiz- oder Kühlleitungen (5) ausgebildet sind, wobei quer zu den langgestreckten Wärmeleitprofilen (4) in Abständen Niederhalter (2, 20) angeordnet sind, **dadurch gekennzeichnet dass** die Niederhalter (2, 20) unter Federspannung wenigstens zwei nebeneinander liegende Wärmeleitprofile (4) an der Verkleidungsplatte (6) anliegend halten.

2. Wand- oder Deckenverkleidung nach Anspruch 1, wobei an den gegenüberliegenden Enden der Niederhalter (2) Federelemente (3) befestigt sind, die mit einem Ende an einer parallel zu den langgestreckten Wärmeleitprofilen (4) verlaufenden Tragschiene (1) eingehängt sind, wobei die Federelemente (3) den Niederhalter (2) unter Spannung an den Wärmeleitprofilen (4) anliegend halten.

3. Wand- oder Deckenverkleidung nach Anspruch 1, wobei die gegenüberliegenden Enden der Niederhalter (2) federnd ausgebildet und an Tragschienen (1) eingehängt sind.

4. Wand- oder Deckenverkleidung nach Anspruch 3, wobei an den gegenüberliegenden Enden der Niederhalter (2) hakenförmige, federnd ausgebildete Endbereiche (2.3) ausgebildet sind, die einen nach innen abgewinkelten bzw. abgerundeten Rand der Tragschienen (1) übergreifen.

5. Wand- oder Deckenverkleidung nach einem der vorhergehenden Ansprüche, wobei die Niederhalter (2) im Querschnitt etwa U-förmig ausgebildet sind und Ausschnitte (2b) zur Aufnahme der Leitungen (5) aufweisen.

6. Wand- oder Deckenverkleidung nach Anspruch 5, wobei an den Ausschnitten (2b) Laschen (2c) ausgebildet sind, die einen Ansatz (4a) an den Wärmeleitprofilen (4) zu deren Halterung durch die Niederhalter hintergreifen.

7. Wand- oder Deckenverkleidung nach Anspruch 1, wobei die Niederhalter (20) als Federelement ausgebildet sind, das an den Enden an den Tragschienen (1) eingehängt ist und in Ausbuchtungen (20.2) Ansätze (4a) der Wärmeleitprofile zu deren Halterung aufnehmen.

8. Wand- oder Deckenverkleidung mit Wärmeleitprofilen (4), die an einer Verkleidungsplatte (6) anliegen und nebeneinanderliegend zur Aufnahme von Heiz- oder Kühlleitungen (5) ausgebildet sind, wobei die langgestreckten Wärmeleitprofile (4) an den gegenüberliegenden Enden jeweils mit einem Federelement (33) versehen sind, mittels denen die Wärmeleitprofile (4) an Tragschienen (1) eingehängt sind, die in Abständen quer zur Längserstreckung der Wärmeleitprofile (4) verlaufen, und an der Verkleidungsplatte (6) federnd anliegend gehalten werden.

## Claims

1. Wall or ceiling cladding with heat conducting profiles (4) which abut at a cladding plate (6) and are formed adjacent each other for receiving heating or cooling pipes (5), wherein hold-down devices (2, 20) are arranged spaced apart transverse to the longitudinal heat conducting profiles (4),
**characterized in that**
the hold-down devices (2, 20) hold at least two heat conducting profiles (4), which are adjacent each other, abutting at the cladding plate (6) under spring tension.

2. Wall or ceiling cladding according to claim 1, wherein spring members (3) are fixed at the opposite ends of the hold-down devices (2) and are hung by one end from a carrying rail (1) extending parallel to the longitudinal heat conducting profiles (4), wherein the spring members (3) hold the hold-down device (2) abutting at the heat conducting profiles (4) under tension.

3. Wall or ceiling cladding according to claim 1, wherein the opposite ends of the hold-down devices (2) are formed resiliently and are hung from carrying rails (1).

4. Wall or ceiling cladding according to claim 3, wherein at the opposite ends of the hold-down devices (2), hook-shaped resiliently-formed end portions (2.3) are formed, which overlap an edge of the carrying rails (1) which is bent inwards or rounded.

5. Wall or ceiling cladding according to one of the preceding claims, wherein the hold-down devices (2) are formed somewhat U-shaped in cross-section and have recesses (2b) for receiving the pipes (5).

6. Wall or ceiling cladding according to claim 5, wherein at the recesses (2b), lugs (2c) are formed which engage in a projection (4a) at the heat conducting profiles (4) for retaining thereof by the hold-down devices.

7. Wall or ceiling cladding according to claim 1, wherein the hold-down devices (20) are formed as spring member which is hung by the ends on the carrying rails (1) and which receive in indentations (20.2) projections (4a) of the heat conducting profiles for retaining thereof.

8. Wall or ceiling cladding with heat conducting profiles (4) which abut at a cladding plate (6) and are formed adjacent each other for receiving heating or cooling pipes (5), wherein the longitudinal heat conducting profiles (4) are each provided at the opposite ends with a spring member (33), by means of which the heat conducting profiles (4) are hooked on carrying rails (1) which extend spaced apart transverse to the longitudinal extension of the heat conducting profiles (4) and are held resiliently abutting at the cladding plate (6).

## Revendications

1. Habillage mural ou plafonnier avec des profilés thermoconducteurs (4) qui reposent sur une plaque d'habillage (6) et sont réalisés les uns à côté des autres pour la réception de conduites de chauffage ou de refroidissement (5), transversalement aux profilés thermoconducteurs (4) étirés en longueur étant disposés à intervalles des serre-flans (2, 20), **caractérisé en ce que** les serre-flans (2, 20) maintiennent en reposant sur la plaque d'habillage (6) sous tension de ressort au moins deux profilés thermoconducteurs (4) se trouvant l'un à côté de l'autre.

2. Habillage mural ou plafonnier selon la revendication 1, sur les extrémités opposées des serre-flans (2) étant fixés des éléments de ressort (3) qui sont suspendus par une extrémité à un rail porteur (1) s'étendant parallèlement aux profilés thermoconducteurs (4) étirés en longueur, les éléments de ressort (3) maintenant en reposant sur les profilés thermoconducteurs (4) sous tension le serre-flan (2).

3. Habillage mural ou plafonnier selon la revendication 1, les extrémités opposées des serre-flans (2) étant réalisées de manière élastique et étant suspendues aux rails porteurs (1).

4. Habillage mural ou plafonnier selon la revendication 3, sur les extrémités opposées des serre-flans (2) étant réalisées des zones d'extrémité (2, 3) en forme de crochet, réalisées de manière élastique qui recouvrent un bord arrondi ou coudé vers l'intérieur des rails porteurs (1).

5. Habillage mural ou plafonnier selon l'une quelconque des revendications précédentes, les serre-flans (2) étant réalisés en section à peu près en forme de U et présentant des découpes (2b) pour la réception des conduites (5).

6. Habillage mural ou plafonnier selon la revendication 5, sur les découpes (2b) étant réalisées des languettes (2c) qui viennent en prise derrière une saillie (4a) sur les profilés thermoconducteurs (4) pour leur fixation par les serre-flans.

7. Habillage mural ou plafonnier selon la revendication 1, les serre-flans (20) étant réalisés comme un élément de ressort qui est suspendu au niveau des extrémités aux rails porteurs (1) et recevant dans des renflements (20.2) des saillies (4a) des profilés thermoconducteurs pour leur fixation.

8. Habillage mural ou plafonnier avec des profilés thermoconducteurs (4) qui reposent sur une plaque d'habillage (6) et sont réalisés les uns à côté des autres pour la réception de conduites de chauffage ou de refroidissement (5), les profilés thermoconducteurs (4) étirés en longueur étant pourvus sur les extrémités opposées respectivement d'un élément de ressort (33), à l'aide desquels les profilés thermoconducteurs (4) sont suspendus aux rails porteurs (1) qui s'étendent à intervalles transversalement à l'axe longitudinal des profilés thermoconducteurs (4) et sont maintenus reposant de manière élastique sur la plaque d'habillage (6).
